# EUROPEAN PATENT APPLICATION

(11) **EP 1 970 283 A2**
(43) Date of publication of application: **17.09.2008**
(21) Application number: 08102683.3
(22) Date of filing: 17.03.2008
(51) Int. Cl.: B62B 7/06

(54) **Device for transporting a child**

(30) Priority: 15.03.2007 EP 07104251
(71) Applicant: Team-Tex, 38230 Charvieu (FR)
(72) Inventor: van der Vegt, Herman, 3512 LL Utrecht (NL)
(74) Representative: Uittenbogaart, Gustaaf Adolf

(57) **Abstract**

Device for transporting a child in a child seat comprising a first frame, a second frame, a linear guide, two first wheel arms and two second wheel arms, the wheel arms having at their wheel ends one or more wheels, whereby each wheel arm is coupled to both the first frame and the second frame and the first frame and the second frame are movable relative to one another along the linear guide for folding and unfolding the wheel arms. In accordance with the invention the first wheel arms are connected at their other ends by a first pivot to the first frame and move during folding or unfolding in a common plane whereby a slide that is connected by a second pivot to the second frame can move along the length of each first wheel arm.

## Description

The invention concerns a device in accordance with the preamble of claim 1. The disadvantage of the known device is that the first wheel arms have insufficient stabilisation perpendicular to the plane in which they fold, which means that during use the wheels have no constant distance, which makes moving the device especially over uneven pavement very uncomfortable. In order to avoid this disadvantage the device according the invention is in accordance with claim 1. In this way the first wheel arms swivel in a common plane and are supported in a stable way in this common plane and also in the swivel direction by the slide. This improved support of the first wheel arms makes moving the device more comfortable.

In accordance with an embodiment the device is in accordance with claim 2. This ensures that the wheels will move inwards when the distance between the first frame and the second frame increases during folding and so reduces the volume of the folded device.

In accordance with an embodiment the device is in accordance with claim 3. In this embodiment the second wheel arms can be near the plane of the first frame and second frame when folded, so providing a reduced volume and they can unfold in a direction away from the first and second frame for increasing the height of the device when unfolded.

In accordance with an embodiment the device is in accordance with claim 4. In this embodiment during folding the first and second frame move towards the ground until they are more or less parallel to the ground. Thereby the device remains standing with its wheels on the ground and the frames and the child seat do not come near the dirty street. In addition, the frames remain above the wheels so that the user does not need to bend too deep.

In accordance with an embodiment the device is in accordance with claim 5. In this embodiment folding or preferably unfolding of the device is assisted by the spring means so that for the user folding or unfolding is eased.

In accordance with an embodiment the device is in accordance with claim 6. In this embodiment folding or unfolding is further eased by making it possible to use the leg muscles.

In accordance with an embodiment the device is in accordance with claim 7. In this embodiment the child seat moves during folding towards the main frame so that in folded position the device takes less room.

In accordance with an embodiment the device is in accordance with claim 8. In this embodiment it is possible to have a stable and tiltable connection between the device and the child seat.

The invention further concerns a child seat in accordance with claim 9. In this way, the child seat is fastened in a way that limits its wobbling in the longitudinal direction, which improves its stability.

In accordance with an embodiment the child seatis in accordance with claim 10. By having the child seat connected in four points to the device a child can be transported in a safe and stable way.

The invention is explained below with reference to one or more exemplary embodiments with the aid of a drawing, in which:
Figure 1 shows a perspective view of a stroller with an infant carrier,
Figure 2 shows a perspective view of a stroller with a child seat for elder children,
Figure 3 shows a perspective view of the stroller of figure 2 with the support bar for the child seat,
Figure 4 shows the stroller of figure 3 in side view,
Figure 5 shows the stroller of figure 4 whereby the support bar is tilted,
Figure 6 shows the stroller of figure 4 whereby the stroller is partly folded,
Figure 7 shows the stroller of figure 4 whereby the stroller is completely folded and the push bar is upright,
Figure 8 shows the stroller of figure 4 whereby the stroller is completely folded and the push bar is flat,
Figure 9 shows a side view of the stroller of figure 1 without the infant carrier,
Figure 10 shows a top view perpendicular to the plane of the first wheel arms and the upper and lower frames, and
Figure 11 shows a side view and section perpendicular to the plane of the first wheel arms and the upper and lower frames.

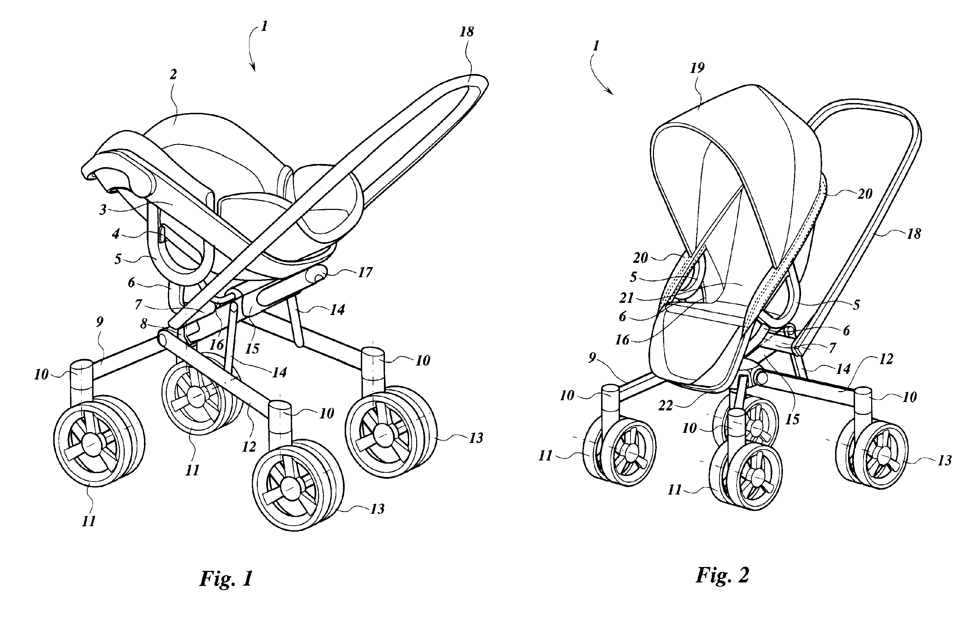

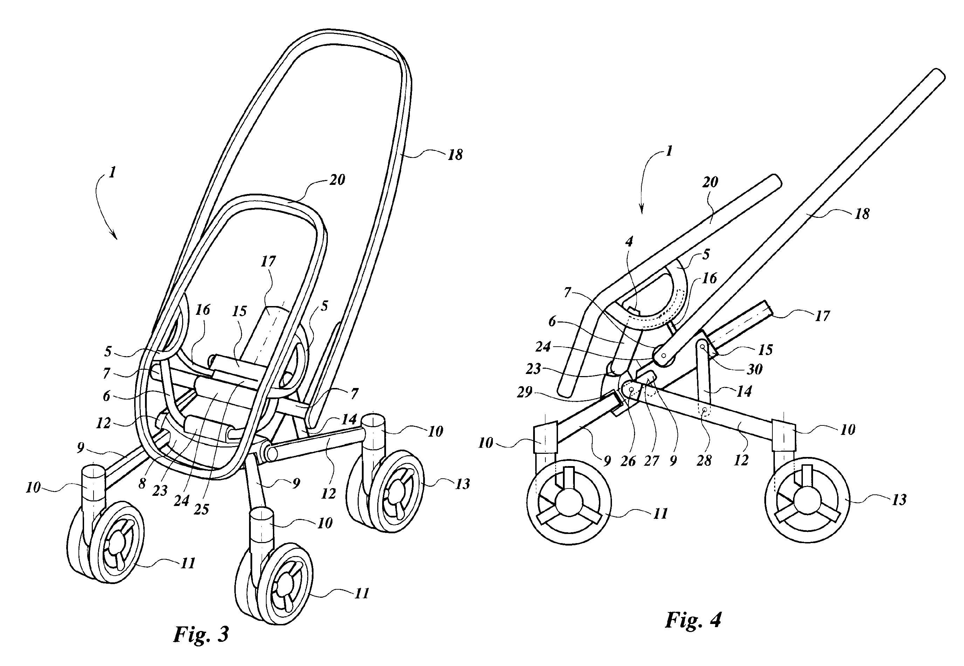

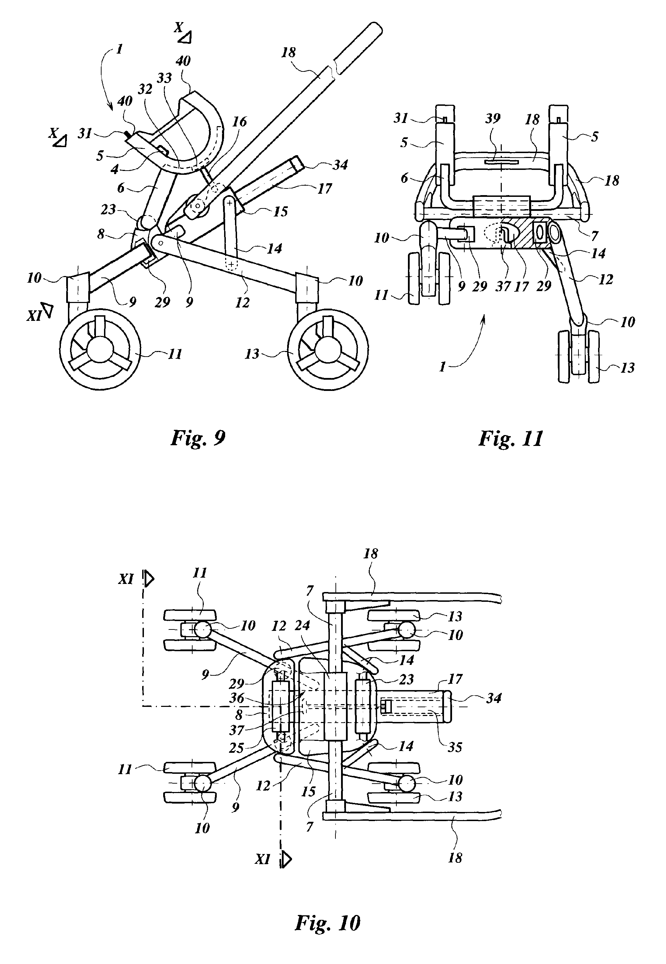

Figure 1 shows a stroller 1 with an infant carrier 2, which infant carrier 2 has a carrier frame 3 that is mounted on a support bracket 5 of the stroller 1. The stroller 1 has two first wheel sets 11 and two second wheel sets 13. Each wheel set can pivot around a vertical axis in a wheel pivot 10. In the illustrated embodiment, the stroller 1 has wheel sets 11, 13 with two wheels that rotate around a common axis. In other embodiments instead of the two wheels a single wheel can be used. The wheel sets 11, 13 support an upper frame 15 and a lower frame 8 which frames 8, 15 can move relative one another and are connected by a rail 17 which is fastened to the lower frame 8 and can slide in a rail guide 36 of the upper frame 15 (see figure 10). The first wheel set 11 is mounted at one end of a first wheel arm 9, the other end of the first wheel arm 9 is coupled to the upper frame 15. For support and stabilizing the first wheel arm 9 is supported in and can slide through a bearing bush 29 (see figures 4 - 11) which is mounted in the lower frame 8. The second wheel set 13 is mounted at one end of the second wheel arm 12; the other end of the second wheel arm 12 is fastened to the lower frame 8. For support and stabilizing the second wheel arm 12 a bar 14 connects the second wheel arm 12 approximately in the middle to the upper frame 15.

Each support bracket 5 is connected by a lower support bar 6 to the lower frame 8 and by an upper support bar 16 to the upper frame 15. For pushing the stroller 1 a push bar 18 is connected by a push bar axis 7 to the upper frame 15. For uncoupling the infant carrier 2 from the stroller 1 the support bracket 5 has a release button (not shown). For setting the tilting angle of the support bracket 5 the support bracket 5 has a setting button 4.

Figure 2 shows the stroller 1 with a child seat 21 with a seat frame 20 mounted on the support bracket 5. The seat frame 20 is part of the child seat 21 which includes a hood 19 and a leg support 22 that might be swivable in order to adjust the child seat 21. The figures 3 - 8 show how the stroller 1 is folded and the movements of the support bracket 5 with the seat frame 20 that represents the frame of the child seat 21.

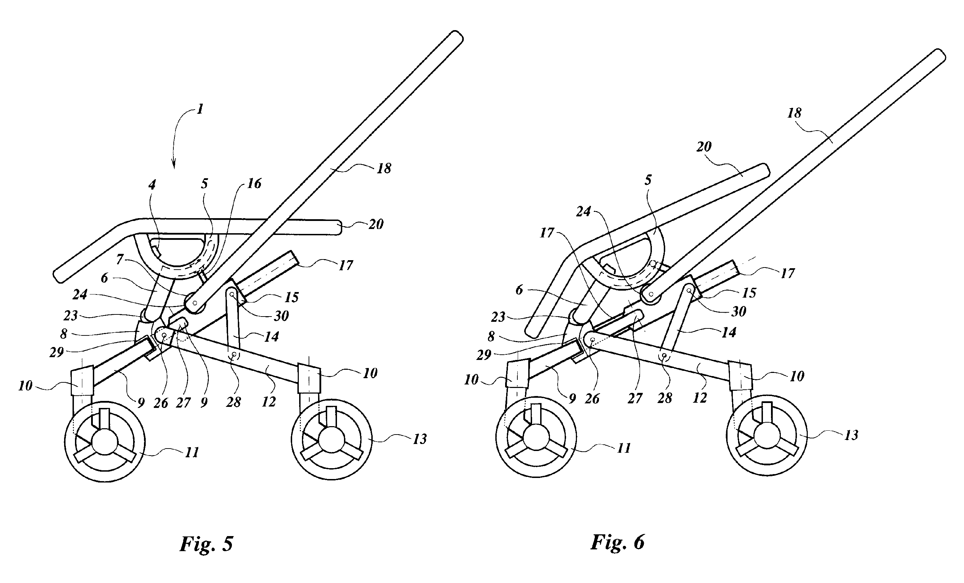

Figure 3 and figure 4 show the stroller 1 in the same position as shown in figure 2 whereby only the seat frame 20 is visible and whereby the other parts of the child seat 21 are not shown. Figure 3 shows that the U - shaped upper support bar 16 can rotate in an upper support bar bearing 25 and the U - shaped lower support bar 6 can rotate in a lower support bar bearing 23. The upper support bar bearing 25 is part of the upper frame 15 and the lower support bar bearing 23 is part of the lower frame 8. Figure 4 shows in interrupted lines that the lower support bar 6 and in the shown embodiment the upper support bar 16 are coupled to the support bracket 5 with slides which give this connection stability so that the support bracket 5 is firmly supported on the stroller 1. In another embodiment, see figures 6 - 8, only the lower support bar 6 has at its end a slide that slides in the support bracket 5 and the upper support bar 16 is connected with a pivot to the slide that is part of the lower support bar 6.

Each first wheel arm 9 is coupled to the upper frame 15 by a wheel arm pivot 27 that has a rotation axis that is perpendicular to the rail 17. The first wheel arm 9 slides through a bearing bush 29 which can rotate around an axis parallel to the rotation axis of wheel arm pivot 27. As these rotation axes are both perpendicular to the rail 17, both first wheel arms 9 move in a plane parallel to the rail 17 when the distance between the rotation axes changes during folding or unfolding of the stroller 1. When folding or unfolding the stroller 1 the rail 17, which is connected to the lower frame 8, moves along a rail guide 36 (see figure 10) in the upper frame 15 and the distance between the upper frame 15 and the lower frame 8 changes. During this movement, the first wheel arm 9 makes a changing angle with the direction of movement along rail 17, which angle increases as the upper frame 15 moves towards the lower frame 8. The distance between the two first wheel sets 11 increases thereby from approximately the width of the lower frame 8, for instance from 0,30 - 0,40m, to the distance suitable for use of the stroller 1, for instance approximately 0,60m. The wheel arm pivot 27 and the bearing 29 rotate respectively in the upper frame 15 and the lower frame 8 around a single axis which can be effected in a construction in a stable way with little backlash and the first wheel arm 9 is guided in a stable way.

In the shown embodiment, there is a single rail 17, which is oval and enclosed by the oval rail guide 36 so that the upper frame 15 and the lower frame 8 cannot rotate relative one another. Instead of one rail 17 the same effect can be obtained in a design for instance with two rails 17 that can be a round shaft whereby the rail guide 36 is formed by two round bearings.

Each second wheel arm 12 is coupled with its end to the lower frame 8 by a wheel arm pivot 26. Along its length, for instance approximately in its middle the second wheel arm 12 is connected with the bar 14 by a pivot 28 and by a pivot 30 to the upper frame 15. The rotation axes of the wheel arm pivot 26 and the pivots 28 and 30 are parallel and during folding or unfolding. The second wheel arms 12 move in planes that makes an angle of approximately 30 degrees with each other. The pivots 26, 28 and 30 each have only one rotation axis so that these pivots can rotate in a stable way with little backlash.

When the stroller 1 is in folded condition whereby the distance between the upper frame 15 and the lower frame 8 is maximal a second wheel arm 12 is more or less in the plane of the first wheel arms 9. The distance between the second wheel sets 13 is then approximately the same as the distance between the first wheel sets 11 for instance between 0,30m and 0,40m. As the plane in which the second wheel arm 12 moves makes an angle with the plane in which the lower frame 8 and the upper frame 15 move, the distance between the second wheel sets 13 increases as the stroller 1 unfolds. In unfolded condition, this distance is more or less the same as the distance between the first wheel sets 11, for instance 0,60m.

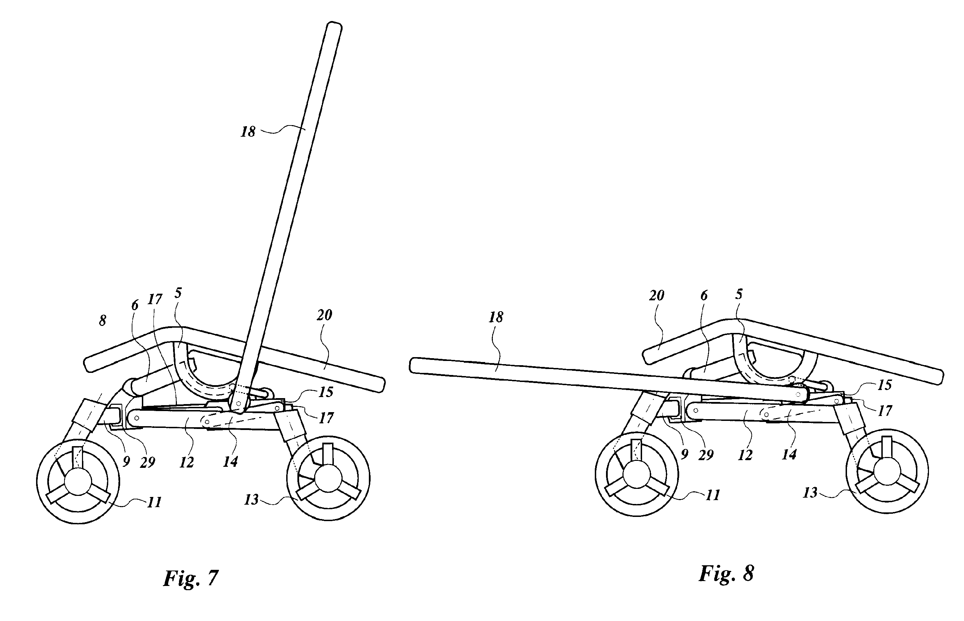

The plane in which the lower frame 8 and the upper frame 15 move makes in the unfolded condition, which is the condition of use, an angle of approximately 30 - 40 degrees with the plane on which the first wheel sets 11 and the second wheel sets 13 are placed. During folding, this angle reduces to approximately zero. The support bracket 5 is coupled to both the upper frame 15 and the lower frame 8 respectively by the upper support bar 16 and the lower support bar 6. As the stroller 1 folds the distance between the upper frame 15 and the lower frame 8 increases. By this movement the distance between the support bracket 5 and the plane of the upper frame 15 and the lower frame 8 decreases so that in folded condition (see figure 7 and 8) the height of the support bracket 5 above the wheels is reduced, which makes the folded stroller 1 easier to store. Also the orientation of the support bracket 5 in the folded situation is such that the seat frame 20 is approximately parallel to the plane of the upper frame 15 and lower frame 8 and the floor on which the folded stroller 1 is standing. The hood 19 can be folded in the plane of the seat frame 20, which reduces the volume of the folded stroller 1 so there is no need to remove the child seat 21 from the stroller 1.

Figure 5 shows the stroller 1 of figure 4 whereby the seat frame 20 has been tilted. As can be seen the support bracket 5 has been rotated along the slide connected to the lower support bar 6.

Figure 6 shows the stroller 1 of figure 4 whereby the upper support bar 16 is pivotable connected to the slide of the lower support bar 6 mounted in the support bracket 5. The figure 6 shows the rail 17 halfway in the upper frame 15, so that there is a distance between the upper frame 15 and the lower frame 8. The bearing bush 29 is approximately halfway the first wheel arm 9 and the bar 14 has moved the second wheel arm 12 towards the upper frame 15. The support bracket 5 is low and near the upper frame 15.

Figure 7 and figure 8 show the stroller 1 of figure 6 completely folded and the first wheel arm 9 and the second wheel arm 12 (together with the bar 14) are more or less in the same plane as the upper frame 15 and the second frame 8. The push bar can be positioned above the upper frame 15, see figure 7, or in the same plane as the wheel arms 9, 12 and the upper frame 15, see figure 8.

In a further embodiment (not shown) it is possible to design the upper support bar bearing 25 and/or the lower support bar bearing 23 in such a way that when the stroller 1 is in folded condition respectively the upper support bar 16 and/or the lower support bar 6 can be uncoupled from the bearing 25,23. By uncoupling either the upper support bar 16 or the lower support bar 6 the support brackets 5 can be moved away from the upper frame 15. If for instance the upper support bar 16 can be moved out of the upper support bar bearing 25 by removing a cover, the support bracket 5 can swivel in the lower support bar bearing 23 and can be located between the push bar 18 (see figure 8) so that the height of the folded stroller 1 is further reduced.

According to another embodiment (not shown) the upper frame 15 and the lower frame 8 are designed such that in folded condition the support bracket 5 fits between the frames 8,18 and the wheel arms 9,12. In such a design, the upper support bar bearing 25 and/or the lower support bar bearing 23 can be located at the underside of the upper frame 15 and the lower frame 8 respectively.

Figure 9 shows the stroller 1 of figure 1 without the infant carrier 2. The infant carrier 2 can be supported on a support surface 40 of the support bracket 5. In the support bracket 5 a first arcuate slide 32 which is connected to the lower support bar 6 can slide along an arcuate path. A second arcuate slide 33, which is connected to the upper support bar 16, can slide in the first arcuate slide 32. The support bracket 5 can rotate over a considerable angle relative to the stroller 1, which is suitable for the use with child seats for older children. For use with an infant carrier 2 such as shown in figure 1 this is undesirable and therefore the support bracket 5 includes a signal pin 31, that extends above the support surface 40 and that is activated by those child seats for which the rotation of the support bracket 5 must be limited. When activated, the signal pin 31 blocks the path of the first arcuate slide 32 and thereby prevents rotation of the support bracket 5 to undesirable angles.

At the end of rail 17, a fold button 34 is placed. Activation of the fold button 34 makes it possible that rail 17 slides in the rail guide 36 that is part of the upper frame 15 (see figure 10). It might be sufficient for folding the stroller 1 to push the fold button 34. It is however preferred that the user takes two separate actions. In this embodiment, the user first unlocks the swivelling of the push bar 18 by pressing a push bar release button 39 (see figure 11) and brings the push bar 18 approximately in the plane of the rail 17. The user then places his or her foot on the fold button 34 and pushes the rail 17 into the upper housing 15 while pulling on the push bar 18. The stroller 1 now folds and the fold button 34 lowers towards the ground while the push bar 18 slightly rotates in the push bar bearing 24. When the stroller 1 is completely folded, the rail 17 locks in the upper frame 15 (not shown).

Figure 10 shows the stroller 1 in unfolded position in the view perpendicular to the plane of the first wheel arms 9, the upper frame 15 and rail 17. Figure 11 shows the front view and partially a section perpendicular to this plane. A gas spring 35 is mounted in rail 17 whereby its one end is coupled to the rail 17 and via the rail 17 to the lower frame 8 and its other end via a bracket 37 to the upper frame 15. During folding of the stroller 1 the rail 17 is pressed into the upper frame 15 and slides along the rail guide 36 and the gas in the gas spring 35 is compressed. As the rail 17 is moved by a foot of the user the additional force of the gas spring 35 is hardly noticed. For unfolding the stroller 1 the rail 17 is unlocked in the upper frame 15 (not shown) and the gas spring 35 pushes the rail 17 out of the upper frame 15 and the lower frame 8 and the upper frame 15 move towards each other. This movement pushes the second wheel arms 12 downwards and the upper frame 15 upwards and the second wheel sets 13 move outwards. The first wheel arms slide through the bearing bushes 29 and fold outwards until the stroller is completely unfolded and the rail 17 is locked in its unfolded position. Now the push bar 18 is brought in its position of use and locked in that position and the stroller 1 is ready for use.

## Claims

1. Device for transporting a child in a child seat (2) comprising a first frame (15), a second frame (8), a linear guide (17, 36), two first wheel arms (9) and two second wheel arms (12), the wheel arms having at their wheel ends one or more wheels (11,13), whereby each wheel arm is coupled to both the first frame and the second frame and the first frame and the second frame are movable relative to one another along the linear guide for folding and unfolding the wheel arms **characterized in that** the first wheel arms (9) are connected at their other ends by a first pivot (27) to the first frame (15) and move during folding or unfolding in a common plane whereby a slide (29) that is connected by a second pivot (29) to the second frame (8) can move along the length of each first wheel arm.

2. Device in accordance with claim 1 whereby the distance between the first pivots (27) is shorter than the distance between the second pivots (29).

3. Device in accordance with claim 1 or 2 whereby the other ends of the second wheel arms (12) are coupled by a third pivot (26) to the second frame (8) and by a coupling bar (14) to the first frame (15).

4. Device in accordance with claim 3 whereby the second wheel arms (12) are coupled such to the first frame (15) and the second frame (8) that they can pivot in two planes making a sharp angle.

5. Device in accordance with one of the previous claims whereby spring means (35) can push the first frame (15) towards the second frame (8).

6. Device in accordance with claim 5 whereby the first frame (15) or the second frame (8) is coupled to a foot support (34) for pushing with a foot against the spring force and the other frame has a handle (18) for holding it during pushing on the foot support.

7. Device in accordance with one of the previous claims whereby the child seat (2) is coupled to a support bracket (5) which is connected by a first support bar (16) to the first frame (15) and by a second support bar (6) to the second frame (8).

8. Device in accordance with claim 7 whereby the support bracket (5) comprises an arc shaped guide in which a slide (32) can move and whereby the first support bar (16) and/or the second support bar (6) are connected to the slide.

9. Child seat suitable for use with the device in accordance with claim 7 or 8 whereby the largest distance between the connecting and/or supporting points (40) on a support bracket (5) is at least one third of the distance between the two brackets.

10. Child seat in accordance with claim 9 whereby the child seat (2) has at least four connecting and/or supporting points (40) connectable to the two support brackets (5) .
